# EUROPÄISCHE PATENTANMELDUNG

(11) **EP 1 075 789 A2**
(43) Veröffentlichungstag der Anmeldung: **14.02.2001**
(21) Anmeldenummer: 00116917.6
(22) Anmeldetag: 05.08.2000
(51) Int. Cl.: A01M 1/20, A01G 13/10

(54) **Schutzzaun für gartenwirtschaftlich genutzte Bodenflächen**

(30) Priorität: 13.08.1999 DE 19937842
(71) Anmelder: GEDA-Kunststoffe GmbH, 86473 Ziemetshausen (DE)
(72) Erfinder: Heubl, Walter, 86420 Diedorf (DE); Scherer, Hubert, 86682 Genderkingen (DE)
(74) Vertreter: Charrier, Rolf, Dipl.-Ing.

(57) **Zusammenfassung**

Die Erfindung betrifft ein Formteil für einen Schutzzaun für gartenwirtschaftlich genutzte Bodenflächen (1) zur Abwehr von kriechenden Schädlingen, insbesondere Schnecken, wobei das Formteil mindestens ein Trägermaterial und ein Salz enthält. Herkömmliche Schneckenzäune, welche aus einfachen Wandungen gebildet sind, weisen den Nachteil auf, daß die Schnecken die Fähigkeit besitzen, die senkrecht angeordneten Flächen zu überwinden. Die Aufgabe der vorliegenden Erfindung, ein Formteil für einen Schutzzaun für gartenwirtschaftlich genutzte Bodenflächen zur Verfügung zu stellen, der zuverlässig und dauerhaft die Abwehr von kriechenden Schädlingen, insbesondere von Schnecken, ermöglichen soll, wird dadurch gelöst, daß das Trägermaterial einen thermoplastischen oder duroplastischen Kunststoff enthält und das Salz dem Trägermaterial in einer Konzentration von 10 Gewichts % bis 90 Gewichts % beigemischt ist. Die Erfindung betrifft ferner einen Schutzzaun für gartenwirtschaftlich genutzte Bodenflächen (1) zur Abwehr von kriechenden Schädlingen, insbesondere Schnecken, der dadurch gekennzeichnet ist, daß er mindestens ein Formteil umfaßt, welches hergestellt ist aus einer Mischung von Salz mit einem Trägermaterial, welches einen thermoplastischen oder duroplastischen Kunststoff enthält.

## Beschreibung

Die Erfindung betrifft einen Schutzzaun für gartenwirtschaftlich genutzte Bodenflächen zur Abwehr von kriechenden Schädlingen, insbesondere von Schnecken, nach dem Oberbegriff des Anspruchs 1.

Aus dem Stand der Technik sind Gartenumrandungen bekannt, welche kriechende Schädlinge, insbesondere Schnecken, aus den gartenwirtschaftlich genutzten Beeten fernhalten sollen. Derartige Vorrichtungen sind im Handel beispielsweise unter dem Begriff "Schneckenzaun" erhältlich.

Weiterhin bekannt sind Schneckenzäune, welche stromdurchflossene blanke Leiter aufweisen, welche die Schnecken vertreiben sollen, sobald diese mit den Leitern in Berührung kommen. In dem deutschen Gebrauchsmuster 81 09 630.5 ist ein Schutzzaun für Gartenbeete oder Gartenanlagen gegen kriechende Schädlinge, insbesondere Schnecken, beschrieben, welcher um das Beet aneinandergrenzend verlegbare vertikale plattenförmige Träger aufweist, an denen zwei parallele, horizontale und gegeneinander isolierte blanke Leiter in einem Abstand voneinander angebracht sind, wobei der Abstand so gewählt ist, daß die Schädlinge die Leiter bei ihrer Überquerung gleichzeitig berühren. Durch Anschluß der Leiter an die Pole einer Niederspannungsquelle wird zwischen den Leitern eine Elektropotentialdifferenz erzeugt, welche den Schnecken bei der Überquerung der beiden Leiter einen Elektroschock vermittelt und diese so vertreibt.

Weiterentwicklungen von Schneckenzäunen mit stromdurchflossenen Leitern sind beispielsweise der DE 197 38 432 A1 und der DE 197 34 371 A1 zu entnehmen.

Zur Vermeidung oder zumindest Verminderung des Schneckenbefalls in Gartenanlagen werden häufig Schneckenvernichtungsgifte eingesetzt. Hierzu ist beispielhaft die DE 197 11 425 A1 genannt, welche ein Mittel zur Bekämpfung pflanzenschädigender Schnecken beschreibt, welches zyklische Polysiloxane enthält und zum Exitus führt, wenn es von den Schnecken oral aufgenommen wird.

Die Wirksamkeit von einfachen Schneckenzäunen, welche keine weiteren schneckenschädigende oder schneckenvertreibende Mittel aufweisen, sind stark eingegrenzt, da die Schnecken die Fähigkeit besitzen, sogar senkrecht angeordnete, glatte Flächen zu überwinden.

Schneckenzäune mit stromdurchflossenen metallischen Leitern weisen den Nachteil auf, daß sie wenig zuverlässig arbeiten, insbesondere wenn sie Umwelteinflüssen ausgesetzt sind. Darüberhinaus erweist sich ihre Montage als aufwendig.

Schneckenvernichtungsgifte haben den Nachteil, daß sie auch für andere Lebewesen toxisch wirken und zu einer Verseuchung der zu nutzenden Gartenfläche führen.

Der vorliegenden Erfindung liegt daher die Aufgabe zugrunde, ein Formteil für einen Schutzzaun für gartenwirtschaftlich genutzte Bodenflächen zur Verfügung zu stellen, wobei der Schutzzaun zuverlässig und dauerhaft die Abwehr von kriechenden Schädlingen, insbesondere von Schnecken, ermöglichen soll. Darüberhinaus soll eine einfache Herstellung der Formteile und eine einfache Montage des Schutzzauns gewährleistet sein.

Gelöst wird diese Aufgabe mit den kennzeichnenden Merkmalen des Formteils nach Anspruch 1, sowie mit den kennzeichnenden Merkmalen des Schutzzauns nach Anspruch 11. Vorteilhafte Ausgestaltungen des Formteils und des Schutzzauns sind jeweils den Unteransprüchen zu entnehmen.

Im folgenden werden einige Ausführungsbeispiele der Erfindung anhand der begleitenden Zeichnungen erläutert. Die Zeichnungen zeigen in
- **Fig. 1**: einen Querschnitt durch einen Schutzzaun,
- **Fig. 2**: eine Draufsicht auf zwei Wandelemente des Schutzzauns von Figur 1,
- **Fig. 3**: eine Draufsicht auf eine vorteilhafte Anordnung des Schutzzauns von Figur1,
- **Fig. 4**: eine weitere Ausführungsform des Schutzzauns von Figur 1,
- **Fig. 5**: eine vorteilhafte Ausführungsform des Schutzzauns von Figur 4.

Der vorliegenden Erfindung liegt die Erkenntnis zugrunde, daß es mittels bekannter Herstellungsverfahren möglich ist, Formteile herzustellen, bei denen einem Trägermaterial eine schneckenschädigende oder schneckenvertreibende Substanz in ausreichender Menge beigemischt ist. Derartige Formteile können dann zur Ausgestaltung eines Schutzzauns für gartenwirtschaftlich genutzte Bodenflächen zur Abwehr von kriechenden Schädlingen, insbesondere Schnecken, eingesetzt werden.

Als Trägermaterialien für die erfindungsgemäßen Formteile kommen Kunststoffe, Harze oder Holzspäne oder Mischungen davon zum Einsatz. Als schneckenschädigende oder schneckenvertreibende Substanzen eignen sich beispielsweise Salze oder bekannte Schneckenvernichtungsmittel. Vorteilhafterweise liegen die zum Einsatz kommenden schneckenschädigenden oder schneckenvertreibenden Substanzen als Pulver oder als Granulat vor.

In einem ersten vorteilhaften Ausführungsbeispiel werden die Formteile aus einer Mischung von Kochsalz und Phenolformaldehydharz hergestellt. Hierzu wurde eine Mischung aus 85 Gew. % Kochsalz und 15 Gew. % Phenolformaldehydharz in einer Laborpresse bei einer Temperatur von 200°C und einem Druck von 200 bar während einer Reaktionszeit von 2 Minuten verpreßt. Anschließend wurde das Werkzeug aus der Heizpresse entnommen und die so hergestellte Preßplatte entformt. Die Preßvorrichtung und das Preßverfahren ist aus der Doromerverarbeitung bekannt.

In einem weiteren vorteilhaften Ausführungsbeispiel werden die Formteile aus einer Mischung von Kochsalz mit einem thermoplastischen Kunststoff, beispielsweise Polypropylen, hergestellt. Zur Herstellung der Formteile wurde in einem Laborextruder eine Mischung aus 80 % Kochsalz (NaCl) und 20 % Polypropylenpulver bei einer Temperatur von 220°C verarbeitet, wodurch eine feste Platte von 2-3 mm Dicke erhalten wurde. Die Verarbeitungstemperatur von 220° C liegt dabei weit unterhalb des Schmelzpunktes von Natriumchlorid (T_{Schmelz} (NaCl) = 801°C).

Formteile ähnlicher Konsistenz wurden im Extruder unter Verwendung anderer Kunststoffe, wie beispielsweise Polystyrol (PS) und ABS hergestellt. Es hat sich überraschenderweise gezeigt, daß es mittels bekannter kunststoffverarbeitenden Verfahren, wie Spritzgußverfahren, Preßverfahren oder Extrudieren, möglich ist, aus Materialmischungen bestehend aus einem Kunststoff und einem Salz Formteile von fester Konsistenz mit einem Salzgehalt bis zu 90 Gew.% herzustellen. Bei Spritzgußverfahren hat sich eine Materialmischung mit 60 Gew.% Salzgehalt als vorteilhaft erwiesen.

Zur Herstellung der Formteile sind darüberhinaus andere Kunststoffe verwendbar, wie beispielsweise die Thermoplaste PVC, PA und PC oder Duroplaste wie Phenol und Epoxidharze. Weiterhin können auch andere Salze zur Anwendung kommen, insbesondere die Salze der Salzsäure bzw. der Kohlensäure. Entscheidend ist dabei nur, daß möglichst viel Salz in eine stabile Matrix eingebettet wird. Überraschenderweise hat sich dabei gezeigt, daß sich das Salz aus den Formteilen auch bei längerer Exposition an Luft nicht oder nur sehr schwach auswäscht.

Als Trägermaterial für die Matrix hat sich dabei auch eine Mischung aus Holzspänen und Harzen als vorteilhaft erwiesen. Derartige Mischungen aus Holzspänen, Harzen und Salzen werden dann durch bekannte Preßverfahren unter Druck und Temperatur zu Formteile gepreßt. Die unter Verwendung von natürlichen Harzen hergestellten Formteile weisen den Vorteil auf, daß sie ausschließlich aus natürlichen Produkten bestehen, was ihre umweitgerechte Entsorgung vereinfacht. Formteile, dessen Trägermaterial Holzspäne umfaßt, weisen darüberhinaus den Vorteil auf, daß die Holzspäne in der Lage sind Feuchtigkeit aufzunehmen und dadurch eine Trocknung des schneckenschädigenden oder schneckenvertreibenden Mittels, insbesondere des Salzes, hervorrufen. Als besonders vorteilhaft hat sich hierbei eine Mischung aus 5 Gewichts % Propylen und 15 Gewichts % Holz als Trägermaterial erwiesen, dem 80 Gewichts % Salz beigemischt ist.

In einem ersten, hier nicht dargestellten Ausführungsbeispiel eines Schutzzauns zur Abwehr von Schecken werden erfindungsgemäße Formteile in Plattenform hergestellt und in vertikaler Lage seitlich aneinandergrenzend um die zu schützende Bodenfläche angeordnet, so daß eine geschlossene Umrandung der Bodenfläche ausgebildet ist. Um einen sicheren Stand der Formteile im Boden zu gewährleisten, weisen die Formteile vorteilhafter Weise an ihrer Unterseite Ankerelemente auf, welche im Boden verankerbar sind. Die Formteile weisen vorteilhafterweise seitliche Befestigungselemente auf, um jeweils benachbarte Formteile aneinander zu befestigen. Langzeitversuche mit einem Schutzzaun, der mit den oben beschriebenen Formteilen gebildet ist, haben gezeigt, daß die schneckenvertreibende Wirkung über einen Zeitraum von mehr als sechs Wochen erhalten bleibt.

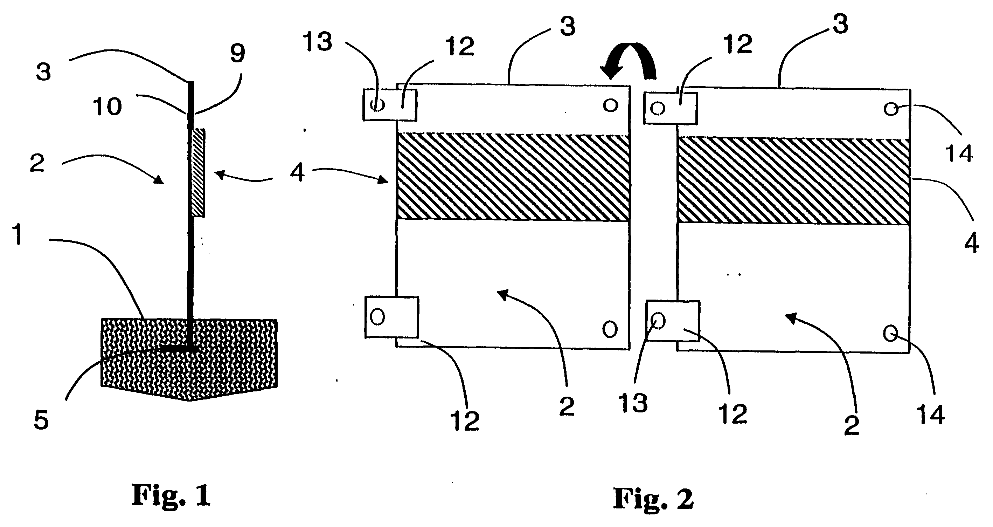

Figur 1 zeigt eine vorteilhafte Ausführungsform eines Schutzzauns zur Abwehr von Schnecken. Dieser ist aus einer Vielzahl von gleichförmigen Wandelementen 2 zusammengesetzt. Die Wandelemente 2 werden dabei so um die zu schützende Gartenfläche 1 angeordnet, daß eine in sich geschlossene Beeteinfassung ausgebildet ist. In der Nähe ihrer Oberseite 3 weisen die Wandelemente 2 ein erfindungsgemäßes Formteil auf, welches eine schneckenschädigende oder schneckenvertreibende Substanz enthält.

Wie in den Figuren 1 und 2 gezeigt, werden die Wandelemente 2 vertikal in den Boden 11 eingesetzt, wobei benachbarte Wandelemente 2 seitlich aneinandergrenzend angeordnet sind. Die plattenförmigen Wandelemente 2 weisen eine Innenseite 10 und eine Außenseite 9 auf. Die Außenseite 9 ist der zu schützenden Bodenfläche 1 abgewandt. Zur standfesten Montage weisen die Wandelemente 2 an ihrer Unterseite Ankerelemente 5 auf, welche in den Boden 11 eingegraben werden. Vorteilhafter Weise sind an den Wandelementen 2 an deren Außenseite 9 flächige Bodenstützen angebracht, welche sich in horizontaler Richtung erstrecken. Diese Bodenstützen stützen die Wandelemente 2 auf der Bodenfläche 1 ab und verhindern so, daß die Wandelemente 2 in den Boden 11 einsinken. Die Wandelemente 2 sind vorteilhafterweise aus Kunststoff oder Holz gefertigt. In der Nähe ihrer Oberseite 3 weisen die Wandelemente 2 ein plattenförmiges Formteil 4 auf, welches sich in der horizontalen Richtung des Schutzzauns erstreckt. Das erfindungsgemäße Formteil 4 enthält dabei eine schneckenschädigende oder schneckenvertreibende Substanz.

Die einzelnen gleichförmigen Wandelemente 2 werden, wie in Figur 2 gezeigt, in horizontaler Richtung bündig aneinandergrenzend verlegt. Zur Befestigung sind an den Wandelementen 2 an jeweils einer Seite Laschen 12 an der Oberseite und der Unterseite angebracht. Die Laschen 12 weisen an ihrer Innenseite 10 jeweils einen Bolzen 13 auf. An der den Laschen 12 gegenüberliegenden Seite ist jeweils auf Höhe der Bolzen 13 eine Bohrung 14 angebracht. Zwei benachbarte Wandelemente 2 werden aneinandergefügt, indem die Bolzen 13 in die Bohrungen 14 eingeklemmt werden. Durch aneinanderfügen von einer Vielzahl von Wandelementen 2 kann eine geschlossene Umrandung der zu schützenden Bodenfläche 1 ausgebildet werden. Wie in Figur 2 gezeigt, ist das Formteil 4 bei jedem Wandelement 2 in etwa auf gleicher Höhe angeordnet. So ist gewährleistet, daß beim Aneinanderfügen der Wandelemente 2 zu einer geschlossenen Umrandung der Bodenfläche 1 ein in sich geschlossener Ringstreifen ausgebildet ist, der die schneckenschädigenden oder schneckenvertreibenden Substanz enthält.

Die Wandelemente 2 sind vorteilhafter Weise aus flexiblem Material, beispielsweise Kunststoff, gebildet, so daß Sie der Form der zu schützenden Bodenfläche 1 beliebig angepaßt werden können. Mittels Winkelelemente können zwei benachbarte Wandelemente 2 auch rechtwinklig zueinander angeordnet werden.

Im Ausführungsbeispiel von Figur 2 ist jeweils ein Formteil 4 auf der Außenseite 9 eines jeden Wandelements 2 lösbar angebracht. Die Formteile 4 schließen dabei bündig mit den Seitenkanten der Wandelemente 2 ab. Die Anbringung der Formteile 4 an den Wandelementen 2 erfolgt beispielsweise durch Klebung, Verschraubung, oder gleichwirkende Mittel. In einem weiteren Ausführungsbeispiel können die Formteile 4 auch unmittelbar in den Wandelementen 2 integriert sein, jeweils bei jedem Wandelement 2 im wesentlichen auf gleicher Höhe. Die Integration der Formteile 4 erfolgt beim Herstellungsprozeß der Wandelemente 2, beispielsweise durch ein Zweischicht-Spritzgußverfahren.

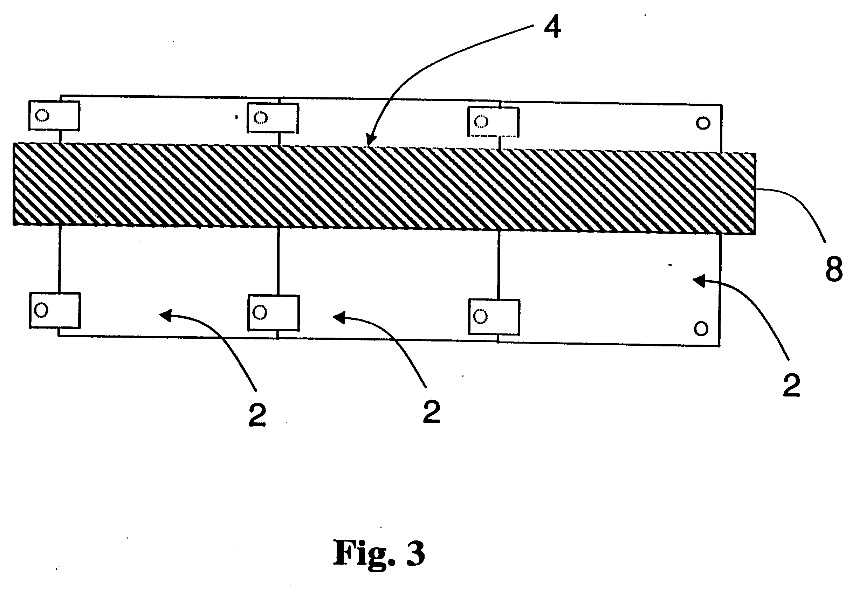

In Figur 3 ist ein vorteilhaftes Ausführungsbeispiel des Schutzzaunes von Figur 1 dargestellt. Der Schutzzaun setzt sich aus einer Vielzahl aneinandergrenzend angeordneter Wandelemente 2 zusammen, welche in der oben beschriebenen Weise aneinandergefügt sind. Nahe der Oberseite des Schutzzauns sind wiederum erfindungsgemäße Formteile 4 angebracht. Die Formteile 4 sind dabei als Bandabschnitte 8 ausgebildet, welche an der Außenseite der Wandelemente 2 in horizontaler Richtung verlaufend angebracht sind und sich jeweils über mehrere Wandelemente 2 erstreckt. Vorteilhafterweise können mehrere Bandabschnitte 8 im wesentlichen in gleicher Höhe aneinandergrenzend an der Außenseite des Schutzzauns angebracht werden. Auf diese Weise wird ein geschlossener Ringstreifen, der die schneckenschädigende oder schneckenvertreibende Substanz enthält, um die zu schützende Fläche gebildet. Der Ringstreifen kann auch von einem einzigen Bandabschnitt 8 gebildet sein, der an seinen beiden Enden aneinandergefügt wird. Die Anbringung der Bandabschnitte 8 an den Wandelementen 2 erfolgt beispielsweise durch Klebung, Verschraubung oder durch Nieten oder ähnlich wirkende Mittel. Vorteilhafterweise sind die Bandabschnitte 8 biegsam ausgebildet. Um ein möglichst flexibles Band herzustellen, eignet sich beispielsweise ein elastischer Kunststoff oder Gummi oder auch ein textiles Gewebe als Trägermaterial. Der Vorteil dieser Ausführungsform liegt darin, daß die Bandabschnitte 8 bzw. das Band einfach vom Schutzzaun ablösbar sind und gegebenenfalls durch neue Bandabschnitte 8 ersetzt werden können.

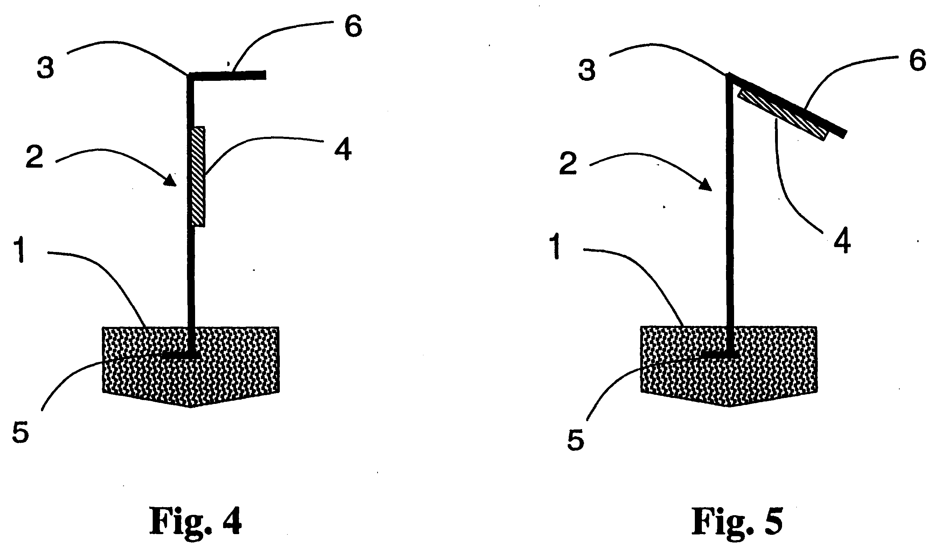

Weitere Ausführungsformen des Schutzzaunes sind in den Figuren 4 und 5 dargestellt. Hierbei weisen die Wandelemente 2 an ihrer Oberseite 3 ein Schutzdach 6 auf, welches sich bezüglich der zu schützenden Bodenfläche 1 nach außen erstreckt. Das Formteil 4 ist dabei wie in Figur 4 gezeigt, an der Außenseite des Wandelements 2 angebracht, und wird von dem Schutzdach 6 vollständig überdeckt. Der Vorteil dieser Ausführungsform liegt darin, daß das Schutzdach 6 einerseits das Formteil 4 vor Regen schützt, und andererseits eine zusätzliche Barriere darstellt, welche von den Schnecken nur schwer überwunden werden kann.

Im Ausführungsbeispiel von Figur 5 ist das Schutzdach an seiner dem Wandelement 2 gegenüberliegenden Seite nach unten zur Bodenfläche 1 hin geneigt. Das Formteil 4 ist dabei an der Unterseite des Schutzdaches 6 angebracht. Auf diese Weise ist das Formteil 4 noch besser durch das Schutzdach 6 abgedeckt und damit vor Regen geschützt. Außerdem ist eine nach unten geneigte Barriere für die Schnecken noch schwieriger zu überwinden.

Das in den Figuren 4 und 5 dargestellte Ausführungsbeispiel ermöglicht insbesondere eine verlängerte Funktionsfähigkeit des Schutzzauns zur Abwehr der Schnecken, indem das Formteil 4 vor Regenwassergeschützt ist, was ein Auswaschen der schneckenschädigenden oder schneckenvertreibenden Substanz aus dem Formteil 4 vermeidet. Durch die lösbare Befestigung der Formteile 4 an den Wandelementen 2 ist darüberhinaus ein schnelles und einfaches Austauschen eines verbrauchten Formteils 4 möglich. Weiterhin vermeidet die Anordnung des Formteils 4 in der Nähe der Oberseite 3 der Wandelemente 2 den direkten Kontakt mit dem Boden 11. Dies verhindert einerseits, daß die schneckenschädigende oder schneckenvertreibende Substanz, insbesondere das Salz, von der Feuchtigkeit des Bodens 11 ausgewaschen wird und vermeidet andererseits auch eine Versalzung des Bodens 11.

In einer weiteren Ausführungsform enthält das Formteil 4 ein aus dem Stand der Technik bekanntes Mittel zur Bekämpfung pflanzenschädigender Schnecken. Ein solches Mittel stellt beispielsweise das in der DE 197 11 425 A1 beschriebene zyklische Polysiloxan dar. Dieses Mittel hat den Vorteil, daß es in Granulatform vorliegt, und daher in Kombination mit den oben beschriebenen Kunststoffen sehr gut zur Herstellung von Formteilen 4 mittels der bekannten Verfahren geeignet ist. Die Anwendung dieses Mittels in einem Schutzzaun hat gegenüber der herkömmlichen Verwendung des Mittels in Schneckenködern den Vorteil, daß eine Vergiftung des Bodens 11 und insbesondere der zu schützenden Pflanzen ausgeschlossen ist, da der Boden 11 nicht mit dem Mittel in Kontakt kommt.

## Patentansprüche

1. Formteil für einen Schutzzaun für gartenwirtschaftlich genutzte Bodenflächen (1) zur Abwehr von kriechenden Schädlingen, insbesondere Schnecken, wobei das Formteil mindestens ein Trägermaterial und ein Salz enthält, **dadurch gekennzeichnet,** daß das Trägermaterial einen thermoplastischen oder duroplastischen Kunststoff enthält und das Salz dem Trägermaterial in einer Konzentration von 10 % bis 90 % des Gewichts des Formteils beigemischt ist.

2. Formteil nach Anspruch 1 oder 2, **dadurch gekennzeichnet,** daß das Salz ein Salz der Salzsäure oder ein Salz der Kohlensäure ist.

3. Formteil nach Anspruch 2, **dadurch gekennzeichnet,** daß das Salz Kochsalz ist.

4. Formteil nach einem der Ansprüche 1 bis 3, **dadurch gekennzeichnet,** daß das Trägermaterial eine Mischung aus Holzspänen und Polypropylen ist, wobei die Konzentration der Holzspäne zwischen 5 % und 50 % des Gewichts des Formteils beträgt.

5. Formteil nach einem der Ansprüche 1 bis 4, **dadurch gekennzeichnet,** daß das Salz dem Trägermaterial in einer Konzentration zwischen 70 % und 90 % des Gewichts des Formteils beigemischt ist.

6. Schutzzaun für gartenwirtschaftlich genutzte Bodenflächen (1) zur Abwehr von kriechenden Schädlingen, insbesondere Schnecken, **dadurch gekennzeichnet,** daß der Schutzzaun mindestens ein Formteil (4) nach einem der Ansprüche 1 bis 5 umfaßt.

7. Schutzzaun nach Anspruch 5, **dadurch gekennzeichnet,** daß der Schutzzaun aus einer Vielzahl von plattenförmigen Formteilen nach einem der Ansprüche 1 bis 5 gebildet ist, wobei die Formteile in vertikaler Lage und seitlich aneinandergrenzend um die zu schützende Bodenfläche (1) angeordnet sind.

8. Schutzzaun nach Anspruch 7, **dadurch gekennzeichnet,** daß der Schutzzaun aus einem oder einer Vielzahl von Wandelementen (2) gebildet ist, wobei an dem oder jedem Wandelement (2) jeweils an seiner Außenseite (9), welche der zu schützenden Fläche (1) abgewandt ist, zumindest nahe seiner der Bodenfläche (1) abgewandten Oberseite (3) ein Formteil (4) nach einem der Ansprüche 1 bis 5 angebracht ist.

9. Schutzzaun nach Anspruch 8, **dadurch gekennzeichnet,** daß das oder jedes Formteil (4) plattenförmig ausgebildet ist und an jedem Wandelement (2) seitlich bündig mit diesem abschließend lösbar angebracht ist, so daß die Formteile (4) an benachbarten Wandelementen (2) seitlich aneinandergrenzend angeordnet sind.

10. Schutzzaun nach Anspruch 9, **dadurch gekennzeichnet,** daß das oder jedes Formteil in dem oder jedem Wandelement (2) in der Nähe seiner Oberseite (3) und seitlich bündig mit diesem abschließend integriert ist.

11. Schutzzaun nach einem der Ansprüche 5 bis 10, **dadurch gekennzeichnet,** daß das oder jedes Formteil nicht mit dem Boden (11) in Berührung ist.

12. Schutzzaun nach einem der Ansprüche 5 bis 11, **dadurch gekennzeichnet,** daß der Schutzzaun mittels Ankerelemente (5) im Boden (11) verankerbar ist.

13. Schutzzaun nach einem der Ansprüche 5 bis 12, **dadurch gekennzeichnet,** daß das oder jedes Wandelement (2) an seiner Oberseite (3) ein von der zu schützenden Fläche (1) wegweisendes Schutzdach (6) aufweist, welches die Formteile vollständig überdeckt.

14. Schutzzaun nach Anspruch 13, **dadurch gekennzeichnet,** daß das Schutzdach (6) nach außen zum Boden (11) hin geneigt ist.

15. Verfahren zur Herstellung eines Formteils, welches aus einer Mischung aus einem Trägermaterial und einem dem Trägermaterial beigemischten Salz besteht, wobei das Trägermaterial einen thermoplastischen oder duroplastischen Kunststoff enthält, **dadurch gekennzeichnet,** daß zunächst eine Mischung von dem Trägermaterial und dem Salz erzeugt wird, welche anschließend bei einer Temperatur zwischen 100°C und 300°C und unter einem Druck von 100 bar bis 300 bar für einen Zeitraum zwischen 60 Sekunden und 3 Minuten gepresst wird.

16. Verfahren nach Anspruch 15, **dadurch gekennzeichnet,** daß die Mischung aus Trägermaterial und dem Salz in einem Spritzgußverfahren umgeformt wird.

17. Verfahren nach einem der Ansprüche 15 oder 16, **dadurch gekennzeichnet,** daß die Mischung aus Trägermaterial und dem Salz in einem Extruder bei einer Temperatur zwischen 100°C und 350°C umgeformt wird.

18. Verfahren nach einem der Ansprüche 15 bis 17, **dadurch gekennzeichnet,** daß das Salz einen Gewichtsanteil von 10% bis 90%, vorzugsweise von 50% bis 85% aufweist.

19. Verfahren nach einem der Ansprüche 15 bis 18, **dadurch gekennzeichnet,** daß das Trägermaterial Polypropylen und Holzspäne enthält, wobei die Konzentration der Holzspäne zwischen 50 % und 90 % des Gewichts des Trägermaterials beträgt.
